# EUROPÄISCHE PATENTSCHRIFT

(11) **EP 2 298 579 B1**
(45) Veröffentlichungstag und Bekanntmachung des Hinweises auf die Patenterteilung: **11.05.2016**
(21) Anmeldenummer: 10173766.6
(22) Anmeldetag: 24.08.2010
(51) Int. Cl.: B60C 15/06

(54) **Fahrzeugluftreifen mit einem Reifenwulst mit mindestens einem Kern und mit mindestens einem Kernprofil und Produktionsverfahren**
Pneumatic type for vehicle with a tyre bead with at least one core and at least one core profile and production method
Pneu de véhicule doté d'un bourrelet ayant au moins un noyau et un profil de noyau et procédé de production

(30) Priorität: 21.09.2009 DE 102009044062
(43) Veröffentlichungstag der Anmeldung: 23.03.2011
(73) Patentinhaber: Continental Reifen Deutschland GmbH, 30165 Hannover (DE)
(72) Erfinder: Kraus, Martin-Josef, 30167, Hannover (DE)
(74) Vertreter: Finger, Karsten

(56) Entgegenhaltungen:
- DE-A1- 2 715 734
- DE-A1-102006 011 158
- DE-T2- 69 804 509

## Beschreibung

Die Erfindung betrifft einen Fahrzeugluftreifen mit Reifenwülsten, die jeweils mit mindestens einem in Umfangsrichtung ausgerichteten Reifenkern ausgestattet sind, einer oder mehreren Karkasseinlagen, insbesondere einer radial ausgerichteten Karkasseinlage oder Karkassbewehrung beziehungsweise mehreren radial ausgerichteten Karkasseinlagen oder Karkassbewehrungen.

Aus der DE 27 15 734 A1 ist ein Fahrzeugluftreifen für Nutzfahrzeuge bekannt, bei dem der Umschlagbereich der Karkasse nach außen durch einen Wulstverstärkungsstreifen geschützt ist, der im Bereich der Mitte der Sohle des Wulstbereiches beginnt und über das Ende des Karkassumschlages nach außen in Richtung zur Seitenwand des Reifens ragt. Der Umschlagbereich ist nicht nur vom Kernprofil durch eine Gummimasse getrennt, sondern es sind auch die außen liegenden Bereiche des Wulstverstärkungsstreifens und des Karkassumschlages voneinander durch eine Gummimasse getrennt. Das außen liegende Ende des Wulstverstärkungsstreifens ist durch eine weitere Gummimasse eingefasst. Bei dem aus der DE 698 04 509 T2 bekannten Nutzfahrzeugreifen ist jeder Wulstbereich an der Außenseite des Karkassumschlages durch eine zusätzliche Bewährung verstärkt, die metallische Festigkeitsträger enthält und deren radial äußeres Ende das Ende des Karkassumschlages überragt. Diese zusätzliche Bewährung ist von der Karkasse und dem Wulstprofil durch eine Gummieinlage getrennt, eine weitere Gummieinlage verläuft an der Außenseite der Bewährung. Die DE 10 2006 011158 A1 befasst sich mit einem Nutzfahrzeugreifen, in dessen Wulstbereichen radial innerhalb des Wulstkernes jeweils wenigstens ein Wulstverstärkungsstreifen angeordnet ist. Ein Wulstaußenprofil erstreckt sich entlang des Kernprofils bis über dessen radial äußeres Ende hinaus.

Es ist bekannt, bei Fahrzeugreifen den Reifenwulst mit mindestens einem Reifenkern, Kernprofilen, Wulstprofilen und einer Wulstverstärkung, welche unterschiedlich ausgeführt sein kann, zu versehen. Bei herkömmlichen Wulstkonstruktionen sind das Kernprofil bzw. der Kernreiter und die Wulstprofile so bemessen, dass mindestens eines der Wulstprofile das Kernprofil deutlich überragt.

Ein Nachteil dabei ist, dass mögliche Aufbaufehler beim Aufbau des unvulkanisierten Reifens beziehungsweise unvulkanisierten Reifenrohlings durch eines oder mehrere der äußeren Wulstprofile, im folgenden äußeres Wulstprofil und äußeres Wulstzwischenprofil genannt, maskiert werden beziehungsweise maskiert werden können. Das bedeutet, dass bestimmte Aufbaufehler nicht von außen am Reifenwulst beziehungsweise in der Seite des Reifenrohlings sichtbar sind. Derartige Aufbaufehler können beispielsweise Luftblasen , Lufteinschlüsse, nicht zweckmäßig ausgeführte Bauteilspleisse oder Faltungen von inneren Bauteilen sein, die sich aufgrund von Produktionsfehlern oder unsachgemäßem Aufbau des unvulkanisierten Reifenrohlings im Reifenwulst beziehungsweise in der Seite des unvulkanisierten Reifenrohlings gebildet haben beziehungsweise bilden können. Bei der Reifenherstellung ist es wünschenswert, derartige Aufbaufehler direkt bei der Herstellung des Reifenrohlings zu ermitteln, damit diese dann frühzeitig aussortiert werden können beziehungsweise zielgenau markiert und einer zweckmäßigen Nachbearbeitung zugeführt werden können. Insbesondere bei Reifenaufbaumaschinen, die lediglich von einer Person bedient werden, ist die zur Verfügung stehende Zeit für die Endkontrolle des Reifenrohlings sehr gering. Fehler beim Aufbau des Reifenrohlings sollten daher möglichst einfach erkennbar sein. Bei vollautomatisch arbeitenden Reifenaufbaumaschinen kann eine sichere Detektion von möglichen Aufbaufehlern über die Gleichförmigkeit des unvulkanisierten Reifenrohlings nur dann gewährleistet werden, wenn mögliche Aufbaufehler wie beispielsweise Luftblasen, Lufteinschlüsse, nicht zweckmäßig ausgeführte Bauteilspleisse oder Faltungen von inneren Bauteilen sicher und genau lokalisiert erkannt werden. Ein weiterer Nachteil bei der herkömmlichen Konstruktion von Reifen, insbesondere Reifenwülsten für Nutzfahrzeugreifen, besteht darin, dass die Wulsthaltbarkeit, abhängig von den Einsatzbedingungen und der Einsatzart, unter Umständen nur eine begrenzte Lebensdauer haben kann. Eine bestimmte Anzahl von Reifen, insbesondere Nutzfahrzeugreifen, kann deshalb unter Umständen vorzeitig ausgetauscht werden müssen, weil der Reifenwulst nach einer bestimmten Lebensdauer unter nicht sachgerechten Einsatzbedingungen oder sogar unsachgemäßem Einsatz Schäden aufweist, die eine Reparatur des betroffenen Reifens unter wirtschaftlichen Gesichtspunkten als nicht vertretbar erscheinen lässt beziehungsweise weil der Reifenwulst sogar irreversible Schäden aufweist.

Der Erfindung liegt daher außerdem die weitere Aufgabe zu Grunde, einen Fahrzeugluftreifen zu schaffen, der eine hohe Wulsthaltbarkeit besitzt.

Gelöst wird die Aufgabe gemäß den kennzeichnenden Merkmalen des Anspruchs 1 dadurch, dass das in radialer Richtung (12) zum Fahrzeugreifen außen liegende Ende (14) des Wulstaußenprofiles (7) schalenförmig am Kernprofil (2) anliegt und unterhalb des äußeren Endes (13) des Kernprofils (2) angeordnet ist, *wobei das Wulstaußenprofil (7) am Karkasslagenumschlag (1() und der Wulstverstärkung (10) außen anliegt.* Das Kernprofil (2) kann hierbei auch aus mehreren Teilprofilen, hier zum Beispiel dem unteren Kernprofilteil (5) und dem oberen Kernprofilteil (6), ausgeführt sein.

Ein Vorteil der erfindungsgemäßen Reifenkonstruktion ist insbesondere darin zu sehen, dass bei dieser erfindungsgemäßen Reifenkonstruktion und dem hieraus resultierenden Fahrzeugluftreifen eine gegenüber herkömmlichen Fahrzeugluftreifen, insbesondere Nutzfahrzeugreifen, wesentlich höhere Wulsthaltbarkeit erzielt wird.

Die höhere Wulsthaltbarkeit ist auf die besondere erfindungsgemäße Wulstkonstruktion zurückzuführen, wodurch bei einer Verformung des Reifenwulstes die lokal wirksamen Druckverformungskräfte und insbesondere die hierbei in den Reifenwulst eingetragene Arbeit, darstellbar über die Inkremente der lokal wirksamen Änderungen von Schub- und Zugmodulen sowie über die Inkremente der lokal wirksamen Änderungen von Schub- und Zugmodulen entlang der Zeitachse, nicht mehr direkt in die Bauteilgrenzen zwischen Kernprofil und Wulstaußenprofil eingetragen werden und hiermit zu einer für den Reifenwulst günstigeren Verteilung der lokal wirksamen Änderungen der Schub- und Zugmodule entlang der Bauteilgrenzen von Kernprofil und Wulstaußenprofil und gegebenenfalls einem äußeren Wulstzwischenprofil, sofern dieses Bestandteil der Reifenkonstruktion ist, führen. Gleichzeitig wird durch die erfindungsgemäße Konstruktion des Reifenwulstes eine Vergleichmäßigung der Druckverformungskräfte und der Arbeit entlang der Bauteilgrenzen von Kernprofil und Wulstaußenprofil und, sofern dieses Bestandteil der Reifenkonstruktion ist, des äußeren Wulstzwischenprofiles erzielt. Maßgeblich sind hierfür die räumliche Trennung der Bauteilgrenzen zwischen Kernprofil und Wulstaußenprofil sowie äußerem Wulstzwischenprofil, sofern dieses Bestandteil der Reifenkonstruktion ist, vom Hauptteil der Einlage sowie die geometrische Ausrichtung der Bauteilgrenzen von Kernprofil und Wulstaußenprofil, sowie dem äußeren Wulstzwischenprofil, sofern dieses Bestandteil der Reifenkonstruktion ist. Diese geometrische Ausrichtung der beschriebenen Bauteilgrenzen führt zu einer deutlichen Verringerung des zwischen dem Hauptteil der Karkasseinlage, beziehungsweise der radial äußersten Karkasseinlage, und der Bauteilgrenze zwischen Kernprofil und Wulstaußenprofil eingeschlossenen Winkels, wenn man die Bauteilgrenze zwischen Kernprofil und Wulstaußenprofil mit einer gedachten Linie bis zum Hauptteil der Karkasseinlage, beziehungsweise der radial äußersten Karkasseinlage, verlängert. Der Schnittpunkt zwischen dieser gedachten Linie als Verlängerung der Bauteilgrenze zwischen Kernprofil und Wulstaußenprofil und dem Hauptteil der Karkasseinlage, beziehungsweise der radial äußersten Karkasseinlage, wird hierbei mindestens radial nach außen verlagert beziehungsweise ein Schnittpunkt zwischen dieser gedachten Linie als Verlängerung der Bauteilgrenze und dem Hauptteil der Karkasseinlage, beziehungsweise der radial äußersten Karkasseinlage, ist nicht mehr vorhanden. Sinngemäß ist dieser Zusammenhang auch auf eine Reifenkonstruktion übertragbar, wenn in dieser Reifenkonstruktion zusätzlich ein äußeres Wulstzwischenprofil eingesetzt wird. Hierbei ist zu berücksichtigen, dass eine entsprechende Staffelung der Reifenwulstbauteile Kernprofil, äußerem Wulstzwischenprofil und Wulstaußenprofil einzuhalten ist, bei der das Kernprofil die radial größte und das Wulstaußenprofil die radial kleinste Erstreckung dieser drei Reifenwulstbauteile im vulkanisierten Reifen zueinander aufweisen,

Dadurch besitzt der Reifen optimale Fahreigenschaften und eine hohe Laufleistung, da der Reifenwulst eine hohe Wulsthaltbarkeit besitzt.
Ein weiterer Vorteil dieses, entsprechend der erfindungsgemäßen Reifenkonstruktion, Schalenaufbaus, ist, dass das gesamte Volumen aus Kernprofil und Wulstaußenprofil sowie äußerem Wulstzwischenprofil, sofern dieses Bestandteil der Reifenkonstruktion ist, geringfügig verringert werden kann und somit zu einer kostengünstigeren Produktion beiträgt.

Ein weiterer Vorteil des beschriebenen und erfindungsgemäßen schalenförmigen Aufbaues des Reifenwulstes und der Seitenwand besteht darin, dass die visuelle Kontrolle des Reifenwulstes und der Seitenwand erheblich erleichtert wird.

Aufbaufehler im Reifenwulst und in der Seitenwand, beispielsweise in Form von Lufteinschlüssen bzw. Luftblasen oder fehlerhaften Bauteilspleissen oder Faltungen von inneren Bauteilen des Reifenwulstes und der Seitenwand, sind direkt bei der Herstellung des Reifenrohlings an der Reifenseitenwand erkennbar. Derartige Aufbaufehler werden nunmehr nicht mehr durch ein das Kernprofil überragendes Wulstaußenprofil und ein das Kernprofil überragendes äußeres Wulstzwischenprofil, sofern dieses Bestandteil der Reifenkonstruktion ist, maskiert. Daher ist es jetzt möglich, die visuelle Kontrolle der Seitenwand bereits auf der Bombierstation der Reifenaufbaumaschine durch den jeweiligen Maschinenführer durchführen zu lassen. Die visuelle Kontrolle wird insbesondere durch die bessere Sichtbarkeit der oberen Bauteilkanten von Kernprofil und Wulstaußenprofil erreicht.

Ein weiterer Vorteil des beschriebenen und erfindungsgemäßen schalenförmigen Aufbaues des Reifenwulstes und der Seitenwand besteht darin, dass bei Einsatz einer vollautomatischen Reifenaufbaumaschine unter Verwendung der hierfür notwendigen beispielsweise optischen Sensorik die automatische Kontrolle des Wulstes und der Seitenwand zur sicheren Bestimmung, Lokalisierung und Kenntlichmachung von Aufbaufehlern im Reifenwulst und in der Seitenwand, beispielsweise in Form von Lufteinschlüssen bzw. Luftblasen oder fehlerhaften Bauteilspleissen oder Faltungen von inneren Bauteilen des Reifenwulstes und der Seitenwand, überhaupt erst ermöglicht wird. Hierdurch kann die Gleichförmigkeit des Reifenwulstes und der Seitenwand über die Gleichförmigkeit der Oberfläche des Reifenwulstes und der Seitenwand durch eine zum Beispiel optische Abtastung sicher geprüft werden.

In einer vorteilhaften Weiterbildung der Erfindung ist vorgesehen, dass das äußere Ende (14) des Wulstaußenprofiles (7) in radialer Richtung (12) zum Fahrzeugreifen mindestens ca. 8 mm unterhalb des äußeren Endes (13) des Kernprofiles (2), beziehungsweise des oberen Kernprofilteiles (6) des Kernprofiles (2), angeordnet ist. Bei diesen Abmessungen ergibt sich ein optimaler Übergang zwischen dem radial äußeren Ende (13) des Kernprofiles (2), beziehungsweise des oberen Kernprofilteiles (6) des Kernprofiles (2), und dem radial äußeren Ende (14) des Wulstaußenprofiles (7), der mit einer erhöhten Wulsthaltbarkeit verbunden ist.

In einer vorteilhaften Weiterbildung der Erfindung ist vorgesehen, dass das äußere Ende eines äußeren Wulstzwischenprofiles, sofern dieses Bestandteil der Reifenkonstruktion ist, in radialer Richtung (12) zum Fahrzeugreifen mindestens ca. 6 mm unterhalb des äußeren Endes (13) des Kernprofiles (2), beziehungsweise des oberen Kernprofilteiles (6) des Kernprofiles (2), angeordnet ist. Gleichzeitig ist das äußere Ende (14) des eines bei einer solchen Reifenkonstruktion ebenfalls eingesetzten Wulstaußenprofiles (7) in radialer Richtung (12) zum Fahrzeugreifen mindestens ca. 6 mm unterhalb des äußeren Endes des äußeren Wulstzwischenprofiles, sofern dieses Bestandteil der Reifenkonstruktion ist, angeordnet.
Bei diesen Abmessungen ergibt sich ein optimaler Übergang der radial äußeren Enden (13), eines äußeren Wulstzwischenprofiles und (14) zwischen Kernprofil (2), äußerem Wulstzwischenprofil, sofern dieses Bestandteil der Reifenkonstruktion ist, und Wulstaußenprofil (7), der mit einer erhöhten Wulsthaltbarkeit verbunden ist.

In einer weiteren vorteilhaften Weiterbildung der Erfindung ist vorgesehen, dass ein Hornprofil (8) schalenförmig am Wulstaußenprofil (7) anliegt und das äußere Ende (19) des Hornprofiles (8) in radialer Richtung (12) unterhalb des äußeren Endes (14) des Wulstaußenprofiles (7) angeordnet ist.
Dadurch wird der schalenförmige Aufbau im Reifenwulst (1) verstärkt. Der schalenförmige Aufbau des Reifenwulstes (1) bewirkt eine bessere Lastverteilung, wodurch insbesondere die Wulsthaltbarkeit gesteigert wird.

In einer weiteren vorteilhaften Weiterbildung der Erfindung ist vorgesehen, dass die äußeren Enden (13), (14) und (19) des Kernprofiles (2), beziehungsweise des oberen Kernprofilteiles (6) des Kernprofiles (2), des Wulstaußenprofiles (7) und des Hornprofils (8) in radialer Richtung (12) des Fahrzeugreifens spitzförmig ausgebildet sind.
Dadurch ergibt sich ein optimaler Übergang zwischen den einzelnen Bauteilgrenzen, insbesondere beim Übergang zum unteren Ende (17) der Reifenseitenwand (16).

In einer weiteren vorteilhaften Weiterbildung der Erfindung ist vorgesehen, dass das radial äußere Ende (13) des Kernprofiles (2), beziehungsweise des oberen Kernprofilteiles (6) des Kernprofiles (2), in der Spitze eine Dicke von 0,30 mm bis maximal 1,00 mm aufweist. Zu bevorzugen ist hier eine Dicke von 0,50 mm bis 0,80 mm.

In einer weiteren vorteilhaften Weiterbildung der Erfindung ist vorgesehen, dass das radial äußere Ende (14) des Wulstaußenprofiles (7) in der Spitze eine Dicke von 0,10 mm bis maximal 0,80 mm aufweist. Zu bevorzugen ist hier eine Dicke von 0,30 mm bis 0,50 mm.

In einer weiteren vorteilhaften Weiterbildung der Erfindung ist vorgesehen, dass das untere Ende der Reifenseitenwand (17) die äußeren Enden (13), (14) und (19) des Kernprofiles (2), beziehungsweise des oberen Kernprofilteiles (6) des Kernprofiles (2), des Wulstaußenprofiles (7) und des Hornprofiles (8) schalenförmig überdeckt. Dadurch wird eine optimale Lastverteilung im Reifenwulst erzielt.

In einer weiteren vorteilhaften Weiterbildung der Erfindung ist vorgesehen, dass das Kernprofil (2) bei Steilschulterreifen, die auf 22.5"-Felgen oder 24.5"-Felgen montiert werden, in radialer Richtung (12) eine Mindesthöhe von ca. 80 mm aufweist.
Diese Abmessung des Kernprofiles (2) gewährleistet eine optimale Lastverteilung im Reifenwulst (1), insbesondere beim Übergang der jeweiligen Bauteilgrenzen.

In einer weiteren vorteilhaften Weiterbildung der Erfindung ist vorgesehen, dass das Kernprofil (2) bei Steilschulterreifen, die auf 22.5"-Felgen oder 24.5"-Felgen montiert werden, in radialer Richtung (12) eine maximale Höhe von ca. 112 mm aufweist.

In einer weiteren vorteilhaften Weiterbildung der Erfindung ist vorgesehen, dass das Kernprofil (2) bei Steilschulterreifen, die auf 19.5"-Felgen montiert werden, in radialer Richtung (12) eine Mindesthöhe von ca. 72 mm aufweist.
Diese Abmessung des Kernprofiles (2) gewährleistet eine optimale Lastverteilung im Reifenwulst (1), insbesondere beim Übergang der jeweiligen Bauteilgrenzen.

In einer weiteren vorteilhaften Weiterbildung der Erfindung ist vorgesehen, dass das Kernprofil (2) bei Steilschulterreifen, die auf 19.5"-Felgen montiert werden, in radialer Richtung (12) eine maximale Höhe von ca. 108 mm aufweist.

In einer weiteren vorteilhaften Weiterbildung der Erfindung ist vorgesehen, dass das Kernprofil (2) bei Steilschulterreifen, die auf 17.5"-Felgen montiert werden, in radialer Richtung (12) eine Mindesthöhe von ca. 64 mm aufweist.
Diese Abmessung des Kernprofiles (2) gewährleistet eine optimale Lastverteilung im Reifenwulst (1), insbesondere beim Übergang der jeweiligen Bauteilgrenzen.

In einer weiteren vorteilhaften Weiterbildung der Erfindung ist vorgesehen, dass das Kernprofil (2) bei Steilschulterreifen, die auf 17.5"-Felgen montiert werden, in radialer Richtung (12) eine maximale Höhe von ca. 100 mm aufweist.

In einer weiteren vorteilhaften Weiterbildung der Erfindung ist vorgesehen, dass das Kernprofil (2) bei Schrägschulterreifen, die auf 20"-Felgen oder 22"-Felgen oder 24"-Felgen montiert werden, in radialer Richtung (12) eine Mindesthöhe von ca. 95 mm aufweist.
Diese Abmessung des Kernprofiles (2) gewährleistet eine optimale Lastverteilung im Reifenwulst (1), insbesondere beim Übergang der jeweiligen Bauteilgrenzen.

In einer weiteren vorteilhaften Weiterbildung der Erfindung ist vorgesehen, dass das Kernprofil (2) bei Schrägschulterreifen, die auf 20"-Felgen oder 22"-Felgen oder 24"-Felgen montiert werden, in radialer Richtung (12) eine maximale Höhe von ca. 148 mm aufweist.

In einer weiteren vorteilhaften Weiterbildung der Erfindung ist vorgesehen, dass das Kernprofil (2) bei Schrägschulterreifen, die auf 15"-Felgen oder 16"-Felgen montiert werden, in radialer Richtung (12) eine Mindesthöhe von ca. 64 mm aufweist.
Diese Abmessung des Kernprofiles (2) gewährleistet eine optimale Lastverteilung im Reifenwulst (1), insbesondere beim Übergang der jeweiligen Bauteilgrenzen.

In einer weiteren vorteilhaften Weiterbildung der Erfindung ist vorgesehen, dass das Kernprofil (2) bei Schrägschulterreifen, die auf 15"-Felgen oder 16"-Felgen montiert werden, in radialer Richtung (12) eine maximale Höhe von ca. 100 mm aufweist.

In einer weiteren vorteilhaften Weiterbildung der Erfindung ist vorgesehen, dass das Kernprofil (2) zweiteilig ist und ein unteres Kernprofilteil (5) sowie ein oberes Kernprofilteil (6) umfasst.
Dadurch können beide Kernprofilteile (5) und (6) aus unterschiedlichen Gummimischungen bestehen, die den jeweiligen Anforderungen anzupassen sind.

In einer weiteren vorteilhaften Weiterbildung der Erfindung ist vorgesehen, dass ein außerdem eingesetztes Wulstinnenprofil (28), insbesondere bei Schrägschulterreifen, die auf 20"-Felgen oder 22"-Felgen oder 24"-Felgen montiert werden, in radialer Richtung (12) das Kernprofil (2) überragt.

In einer weiteren vorteilhaften Weiterbildung der Erfindung ist vorgesehen, dass das Ende (18) der Karkasseinlage (9) zwischen dem Kernprofil (2) sowie dem Wulstaußenprofil (7) angeordnet ist und in radialer Richtung (12) unterhalb des äußeren Endes (19) des Hornprofiles (8) endet.
Dadurch wird eine optimale Lastverteilung im Reifenwulst erreicht.

In einer weiteren vorteilhaften Weiterbildung der Erfindung ist vorgesehen, dass das Ende (18) der Karkasseinlage (9), das zwischen dem Kernprofil (2) sowie dem Wulstaußenprofil (7) angeordnet ist und in radialer Richtung (12) unterhalb des äußeren Endes (19) des Hornprofiles (8) endet, bei Steilschulterreifen, die auf 19.5"-Felgen oder 22.5"-Felgen oder 24.5"-Felgen montiert werden, eine radiale Höhe, ausgehend vom Durchmesser (20) in radialer Richtung (12), von zwischen 32 mm und 38 mm aufweist.

In einer weiteren vorteilhaften Weiterbildung der Erfindung ist vorgesehen, dass das Ende (18) der Karkasseinlage (9), das zwischen dem Kernprofil (2) sowie dem Wulstaußenprofil (7) angeordnet ist und in radialer Richtung (12) unterhalb des äußeren Endes (19) des Hornprofiles (8) endet, bei Steilschulterreifen, die auf 17.5"-Felgen montiert werden, eine radiale Höhe, ausgehend vom Durchmesser (20) in radialer Richtung (12), von zwischen 30 mm und 35 mm aufweist.

In einer weiteren vorteilhaften Weiterbildung der Erfindung ist vorgesehen, dass das Ende (18) der Karkasseinlage (9), das zwischen dem Kernprofil (2) sowie dem Wulstaußenprofil (7) angeordnet ist und in radialer Richtung (12) unterhalb des äußeren Endes (19) des Hornprofiles (8) endet, bei Schrägschulterreifen, die auf 20"-Felgen oder 22"-Felgen oder 24"-Felgen montiert werden, eine radiale Höhe, ausgehend vom Durchmesser (20) in radialer Richtung (12), von zwischen 61 mm und 85 mm aufweist.

In einer weiteren vorteilhaften Weiterbildung der Erfindung ist vorgesehen, dass das Ende (18) der Karkasseinlage (9), das zwischen dem Kernprofil (2) sowie dem Wulstaußenprofil (7) angeordnet ist und in radialer Richtung (12) unterhalb des äußeren Endes (19) des Hornprofiles (8) endet, bei Schrägschulterreifen, die auf 15"-Felgen oder 16"-Felgen montiert werden, eine radiale Höhe, ausgehend vom Durchmesser (20) in radialer Richtung (12), von zwischen 30 mm und 35 mm aufweist.

In einer weiteren vorteilhaften Weiterbildung der Erfindung ist vorgesehen, dass das Ende (18) der Karkasseinlage (9) geometrisch und räumlich durch das aus einer Elastomermischung oder mehreren Elastomermischungen bestehende Kernprofil (2) vom Hauptteil der Karkasseinlage (9) bzw. der radial äußersten Karkasseinlage getrennt ist. Durch diese offene Wulstkonstruktion des Reifens oder Luftreifens wird eine Entkopplung zwischen dem Hauptteil der Karkasseinlage (9) beziehungsweise den Karkasseinlagen sicher gestellt.

In einer weiteren vorteilhaften Weiterbildung der Erfindung ist vorgesehen, dass eine Wulstverstärkung (10) mit Festigkeitsträgern aus einem Stahlcord in einem Teilbereich der Karkasseinlage (9) herumgeschlagen ist, wobei die Festigkeitsträger dieser Wulstverstärkung (10) im Wesentlichen in Umfangsrichtung ausgerichtet sind. Dadurch wird der Reifenwulst (1) verstärkt und eine erhöhte Wulsthaltbarkeit erzielt.

In einer weiteren vorteilhaften Weiterbildung der Erfindung ist vorgesehen, dass die Festigkeitsträger aus einem Stahlcord, die zur Wulstverstärkung eingesetzt werden, aus einem mehrfilamentigen, verseilten Stahlcord bestehen.

In einer weiteren vorteilhaften Weiterbildung der Erfindung ist vorgesehen, dass die Festigkeitsträger aus einem Stahlcord, die zur Wulstverstärkung eingesetzt werden, einen Winkel von mindestens 10 Grad zur Umfangsrichtung aufweisen.

In einer weiteren vorteilhaften Weiterbildung der Erfindung ist vorgesehen, dass die Festigkeitsträger aus einem Stahlcord, die zur Wulstverstärkung eingesetzt werden, einen Winkel von höchstens 24 Grad zur Umfangsrichtung aufweisen.

In einer weiteren vorteilhaften Weiterbildung der Erfindung ist vorgesehen, dass die Festigkeitsträger aus einem Stahlcord, die zur Wulstverstärkung eingesetzt werden, einen Durchmesser zwischen 0,22 mm bis 1,89 mm aufweisen.

In einer weiteren vorteilhaften Weiterbildung der Erfindung ist vorgesehen, dass die Festigkeitsträger aus einem Stahlcord, die zur Wulstverstärkung eingesetzt werden, aus zwei oder mehreren Lagen bestehen.

In einer weiteren vorteilhaften Weiterbildung der Erfindung ist vorgesehen, dass die Festigkeitsträger aus einem Stahlcord, die zur Wulstverstärkung eingesetzt werden und aus zwei oder mehreren Lagen bestehen, mindestens zwei zueinander kreuzende Lagen aufweisen.

In einer weiteren vorteilhaften Weiterbildung der Erfindung ist vorgesehen, dass ein oder mehrere Wulstverstärker der Wulstverstärkung (10) mit Festigkeitsträgern aus einem textilen Kord, wie beispielsweise aus einem Polyamid oder einem Polyester oder einem Polypeptid oder einem Polyglykosid oder einem Polyolefin, in einem Teilbereich der Karkasseinlage (9) herumgeschlagen ist oder sind, wobei die Festigkeitsträger im Wesentlichen in Umfangsrichtung ausgerichtet sind. Dadurch wird der Reifenwulst (1) verstärkt und eine erhöhte Wulsthaltbarkeit erzielt.

In einer weiteren vorteilhaften Weiterbildung der Erfindung ist vorgesehen, dass die Festigkeitsträger aus den beschriebenen textilen Korden, die zur Wulstverstärkung eingesetzt werden, aus mehrfilamentigen, verseilten textilen Korden bestehen.

In einer weiteren vorteilhaften Weiterbildung der Erfindung ist vorgesehen, dass die Festigkeitsträger aus den beschriebenen textilen Korden, die zur Wulstverstärkung eingesetzt werden, einen Winkel von mindestens 12 Grad zur Umfangsrichtung aufweisen.

In einer weiteren vorteilhaften Weiterbildung der Erfindung ist vorgesehen, dass die Festigkeitsträger aus den beschriebenen textilen Korden, die zur Wulstverstärkung eingesetzt werden, einen Winkel von höchstens 45 Grad zur Umfangsrichtung aufweisen.

In einer weiteren vorteilhaften Weiterbildung der Erfindung ist vorgesehen, dass die Festigkeitsträger aus den beschriebenen textilen Korden, die zur Wulstverstärkung eingesetzt werden, einen Durchmesser zwischen 0,14 mm bis 2,13 mm aufweisen.

In einer weiteren vorteilhaften Weiterbildung der Erfindung ist vorgesehen, dass die Festigkeitsträger aus den beschriebenen textilen Korden, die zur Wulstverstärkung eingesetzt werden, aus zwei oder mehreren Lagen bestehen.

In einer weiteren vorteilhaften Weiterbildung der Erfindung ist vorgesehen, dass die Festigkeitsträger aus den beschriebenen textilen Korden, die zur Wulstverstärkung eingesetzt werden und aus zwei oder mehreren Lagen bestehen, mindestens zwei zueinander kreuzende Lagen aufweisen.

In einer weiteren vorteilhaften Weiterbildung der Erfindung ist vorgesehen, dass die Festigkeitsträger aus den beschriebenen textilen Korden, die zur Wulstverstärkung eingesetzt werden und aus zwei oder mehreren Lagen bestehen, mindestens zwei verschiedene Winkel aufweisen.

In einer weiteren vorteilhaften Weiterbildung der Erfindung ist vorgesehen, dass die Kernfahne (24) aus einem verseilten, textilen Kord besteht und einen Winkel zwischen 38 Grad bis zu 52 Grad zur Umfangsrichtung aufweist, Die Kernfahne (24) weist eine Fadendichte von mindestens 80 Korden je 100 mm Breite unter dem Drahtkern (3) auf. Der Korddurchmesser beträgt zwischen 0,28 mm und 0,92 mm.

In einer weiteren vorteilhaften Weiterbildung der Erfindung besteht die Kernfahne (24) aus einer vulkanisierbaren Elastomermischung.

In einer weiteren vorteilhaften Weiterbildung der Erfindung ist vorgesehen, dass der Fahrzeugreifen ein Nutzfahrzeugreifen ist.
Bei Nutzfahrzeugreifen führt eine entsprechende Konstruktion des Reifenwulstes zu einer besseren Wulsthaltbarkeit. Die Wulsthaltbarkeit spielt bei Nutzfahrzeugreifen eine entscheidende Rolle, da diese gegenüber PKW-Reifen im Normalfall wesentlich höheren Lasten ausgesetzt sind.

Anhand von Ausführungsbeispielen soll die Erfindung näher erläutert werden. Es zeigt:

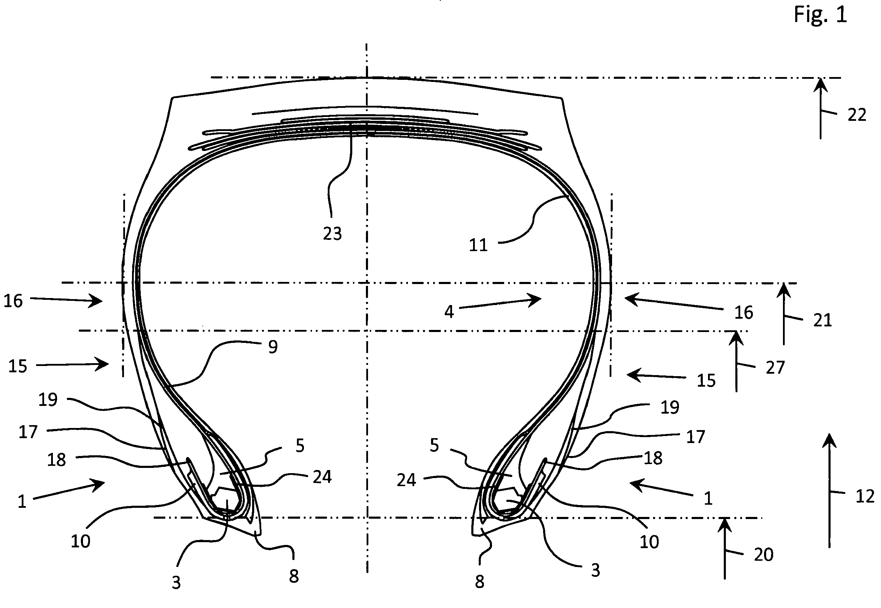

- Fig. 1:: Eine Radialschnittansicht eines Reifenquerschnittes eines Nutzfahrzeugreifens.

Die Figur 1 zeigt schematisch eine Radialschnittansicht eines Reifenquerschnittes. In dieser Radialschnittansicht eines Reifenquerschnittes eines Nutzfahrzeugreifens sind die Gürtellagen (23), die Karkasseinlage (9), die kombinierten Reifenbauteile Innenschicht und Füllprofil (11), das Hornprofil (8) und dessen äußeres Ende (19), das untere Ende (17) der Reifenseitenwand, der Lagenumschlag (18), die Kernfahne (24), der Wulstkern (3), das untere Kernprofilteil (5) und die generelle Positionierung der Wulstverstärkung (10) dargestellt. Die Wulstverstärkung (10) ist hier nicht differenziert dargestellt und kann, wie oben beschrieben, sowohl aus einer oder mehreren Lagen aufgebaut sein und, wie oben beschrieben, sowohl aus Festigkeitsträgern aus Stahlkorden oder aus Festigkeitsträgern aus textilen Korden aufgebaut sein. Die Kernfahne (24) ist vorzugsweise aus einem textilen Festigkeitsträger aufgebaut. Desweiteren sind der Reifenaussendurchmesser (22), der Reifendurchmesser bis zur Erstreckung der größten Reifenbreite (21), der Reifendurchmesser bis zum Wulstbezugspunkt (20), der Reifendurchmesser bis zum radial äußeren Ende des Kernprofiles (27) und die radiale Richtung (12) dargestellt. Desweiteren sind die Reifeninnenseite (4), die Reifenaussenseite (15), die Reifenseitenwand (16) und der Reifenwulst (1) eingezeichnet, Gezeigt wird in dieser Darstellung die notwendige Volumenausfüllung des Wulstes. Zu erkennen ist außerdem, dass die Wulstbauteile mit einem Abstand zum Reifendurchmesser der Erstreckung der größten Reifenbreite (21) enden.

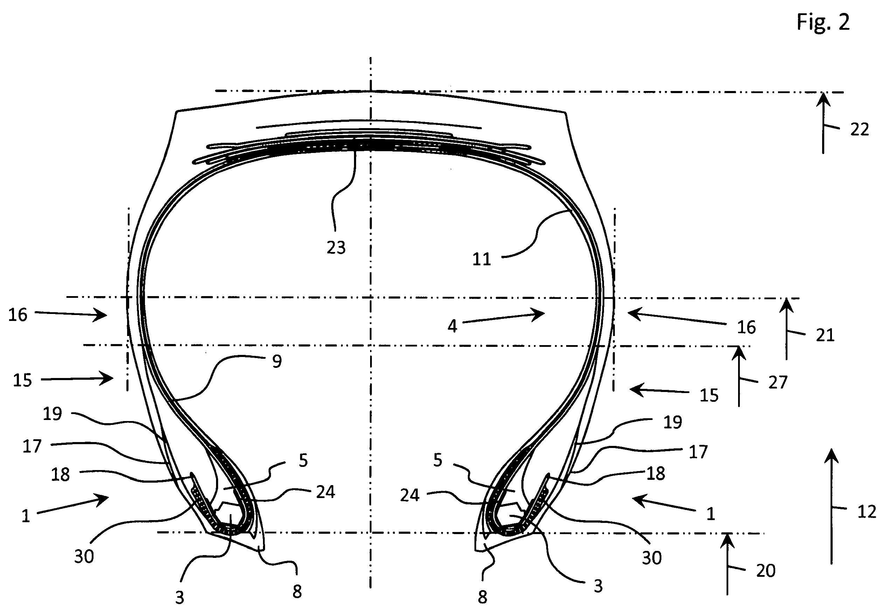

- Fig. 2:: Eine Radialschnittansicht des gleichen Reifenquerschnittes wie in Fig. 1, hier beispielhaft mit einer Wulstverstärkung durch Festigkeitsträger in einer Lage, hier aus einem Stahlkord (30).

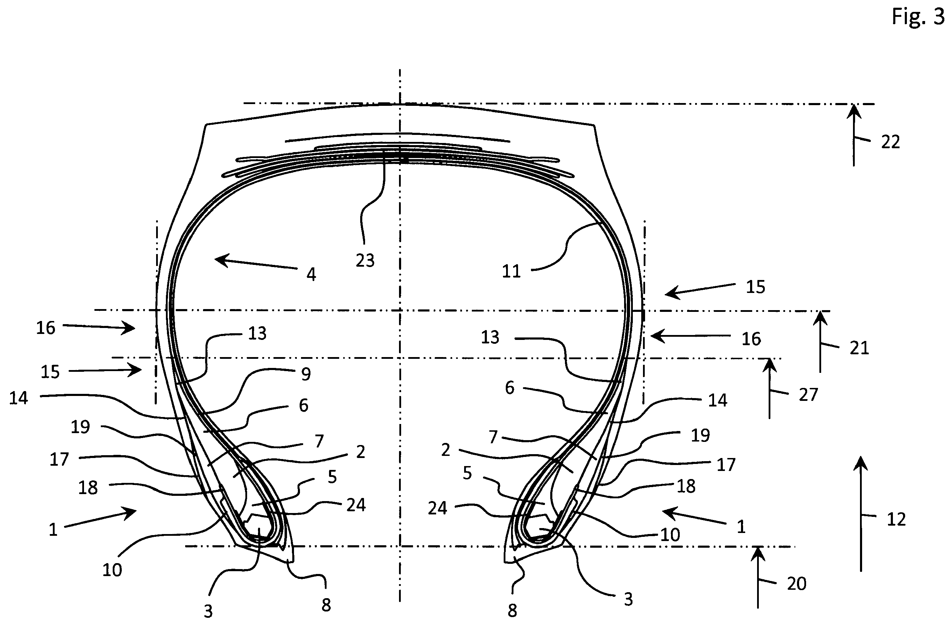

- Fig. 3:: Eine Radialschnittansicht des Reifenquerschnittes aus Fig. 1, hier mit der erfindungsgemäßen Ausbildung des Kernprofiles (2) und des Wulstaussenprofiles (7). Das Kernprofil (2) setzt sich aus dem unteren Kernprofilteil (5) und dem oberen Kernprofilteil (6) zusammen. Das radial äußere Ende (14) des Wulstaussenprofiles (7) endet radial unterhalb des radial äußeren Endes (13) des Kernprofiles (2) beziehungsweise des oberen Kernprofilteiles (6).

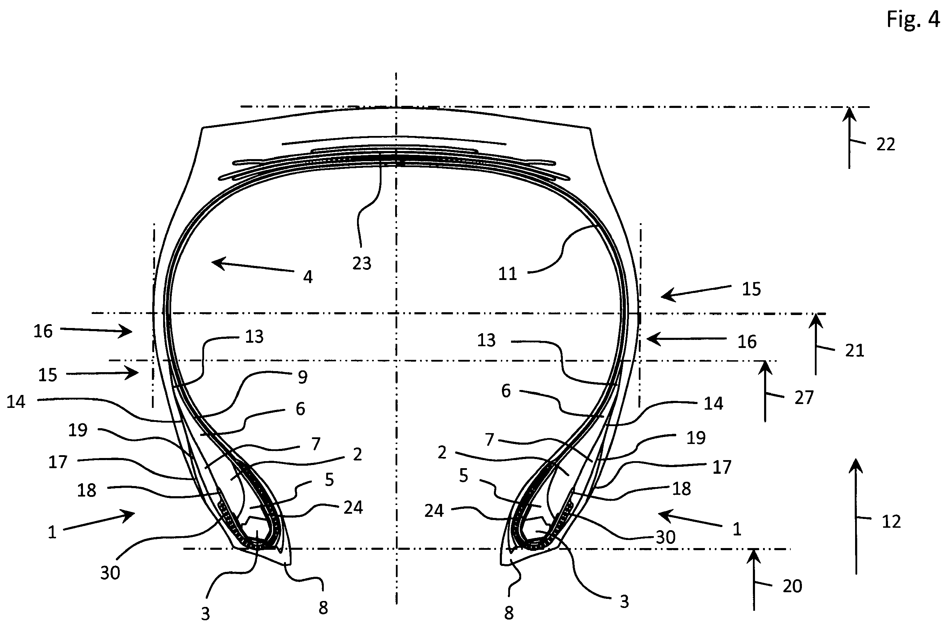

- Fig. 4:: Eine Radialschnittansicht des Reifenquerschnittes aus Fig. 2, hier beispielhaft mit einer Wulstverstärkung durch Festigkeitsträger in einer Lage, hier aus einem Stahlkord (30).
- Fig. 5 a:: Eine Radialschnittansicht eines Reifenwulst, der erfindungsgemäß ausgestaltet ist.

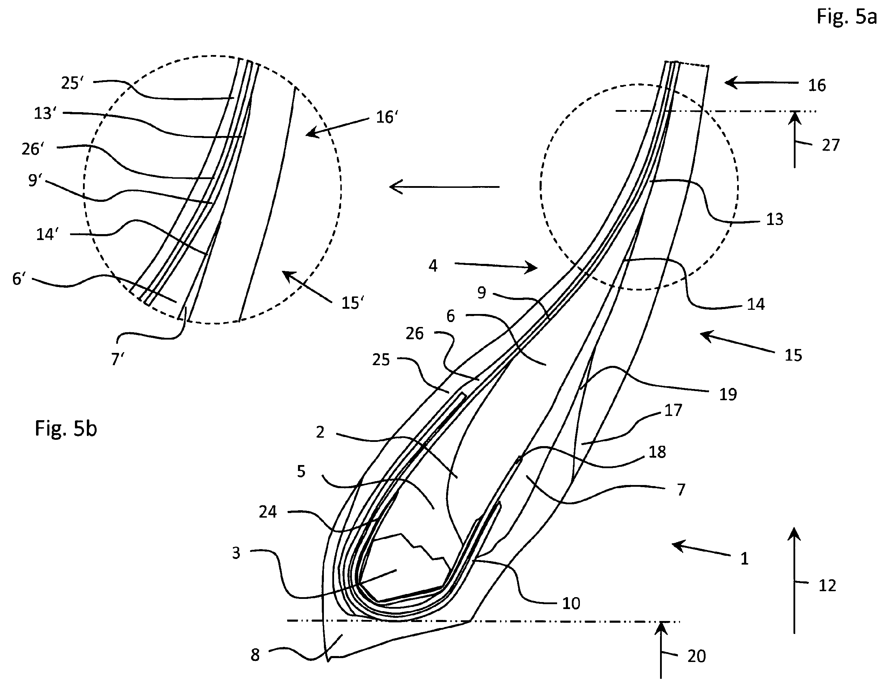

Die Figur 5a zeigt schematisch den Reifenwulst (1) des erfindungsgemäßen Fahrzeugluftreifens mit dem Kernprofil (2). Es handelt sich bei dieser Figur um eine Radialschnittansicht des Fahrzeugluftreifens, bei der das Kernprofil (2) und der Kern (3) als Querschnittprofil dargestellt sind. In der Figur ist der rechte Reifenwulst (1) dargestellt und die unter Druckluft stehende Reifeninnenseite (4) liegt auf der linken Seite des Reifenwulstes (1). Das Kernprofil (2) setzt sich aus 2 Kernprofilteilen zusammen, dem unteren Kernprofilteil (5) und dem oberen Kernprofilteil (6). Diese können beispielsweise aus unterschiedlichen Gummimischungen bestehen. Die Karkasseinlage (9) ist um den Reifenkern (3) von innen nach außen herumgeschlagen. Auf der Außenseite der Karkasseinlage (9) ist eine Wulstverstärkung (10) herumgeschlagen, die Festigkeitsträger aufweist, die im Wesentlichen in Umfangsrichtung des Fahrzeugreifens ausgerichtet sind. Auf der Reifeninnenseite ist die luftundurchlässige Innenseele (25) und das Füllprofil (26) angeordnet. Das Füllprofil wird in der Fachliteratur auch als Kappe bezeichnet. Das Wulstaußenprofil (7) liegt im oberen Bereich des Wulstaußemprofiles schalenförmig am Kernprofil (2) an, wobei das äußere Ende (13) des Kernprofiles (2) das äußere Ende (14) des Wulstaußenprofiles (7) deutlich überragt. Das Kernprofil (2) besitzt bei Steilschulterreifen, die auf 22.5"-Felgen oder auf 24.5"-Felgen montiert werden, eine optimale Höhe zwischen 80 und 112 mm in radialer Richtung (12). Am Wulstaußenprofil (7) liegt ebenfalls schalenförmig das Hornprofil (8) an. Dieser schalenförmige Aufbau aus Kernprofil (2), Wulstaußenprofil (7) und Hornprofil (8) wird durch das untere Ende (17) der Reifenseitenwand ergänzt. Durch diese Konstruktion des Reifenwulstes wird eine optimale Lastverteilung erzielt, die insbesondere zu einer erhöhten Wulsthaltbarkeit führt. Ein weiterer Vorteil dieser Reifenwulstkonstruktion besteht darin, dass im Reifenwulst oder unter der Seitenwand eingeschlossene Luftblasen oder andere Störungen, wie diese oben beschrieben worden sind, an den Bauteilgrenzen zwischen Kernprofil, Wulstaußenprofil, Hornprofil und dem unteren Ende der Reifenseitenwand einfach erkannt werden können. Gleichzeitig wird durch diesen Aufbau die Grundlage für eine qualitativ hochwertige Produktion von Nutzfahrzeugreifen mit vollautomatischen Reifenaufbaumaschinen überhaupt erst ermöglicht.
- Fig. 5b:: Eine Detailansicht eines Ausschnittes der Radialschnittansicht der Fig. 5a.
- Fig. 6a:: Eine weitere Radialschnittansicht eines Reifenwulstes, der erfindungsgemäß ausgestaltet ist.

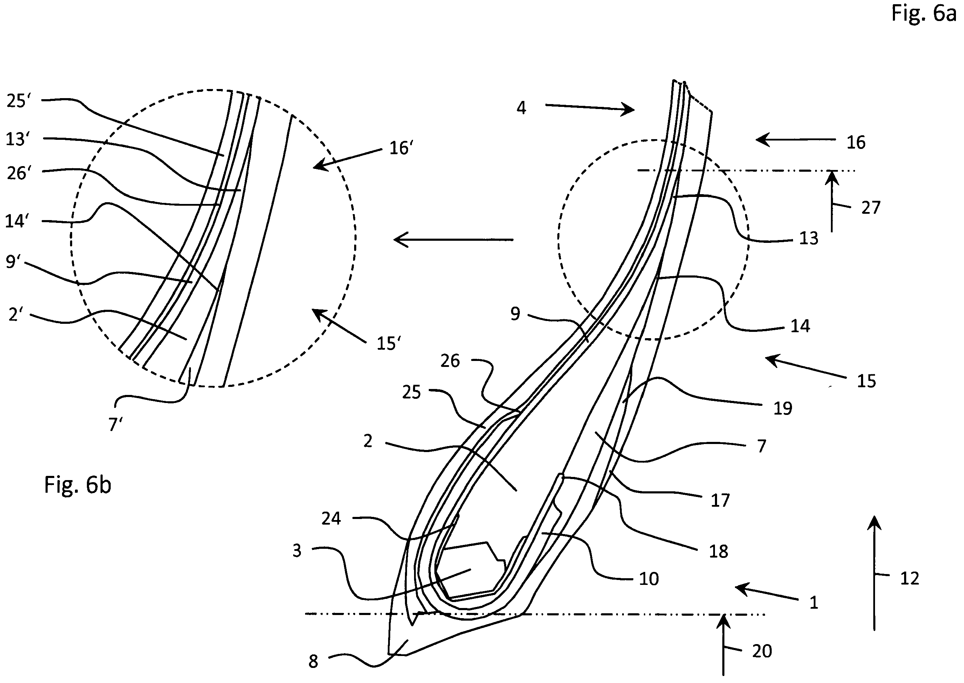

In Fig. 6a ist eine Radialschnittansicht eines Reifenwulstes dargestellt, in dem ein einfaches Kernprofil (2) eingesetzt wird. Eine solche Konstruktion bietet sich insbesondere bei Reifen an, die im Einsatz an Nutzfahrzeugen oder anderen Fahrzeugen nur unregelmäßig Überlasten ausgesetzt sind. Hierdurch lassen sich gegebenenfalls notwendige Investitions- und Produktionskosten vermeiden.
- Fig. 6b:: Eine Detailansicht eines Ausschnittes der Radialschnittansicht der Fig. 6a.

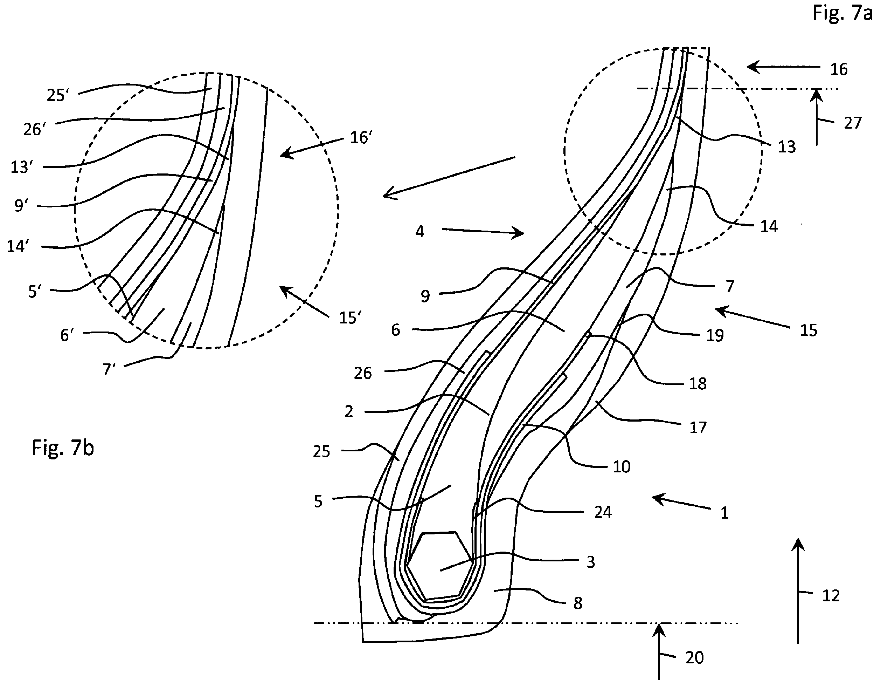

- Fig. 7a:: Eine Radialschnittansicht eines Reifenwulstes eines Schrägschulterreifens, der beispielsweise auf 20"-Felgen oder 22"-Felgen oder 24"-Felgen montiert wird.
- Fig. 7b:: Eine Detailansicht eines Ausschnittes der Radialschnittansicht der Fig. 7a.

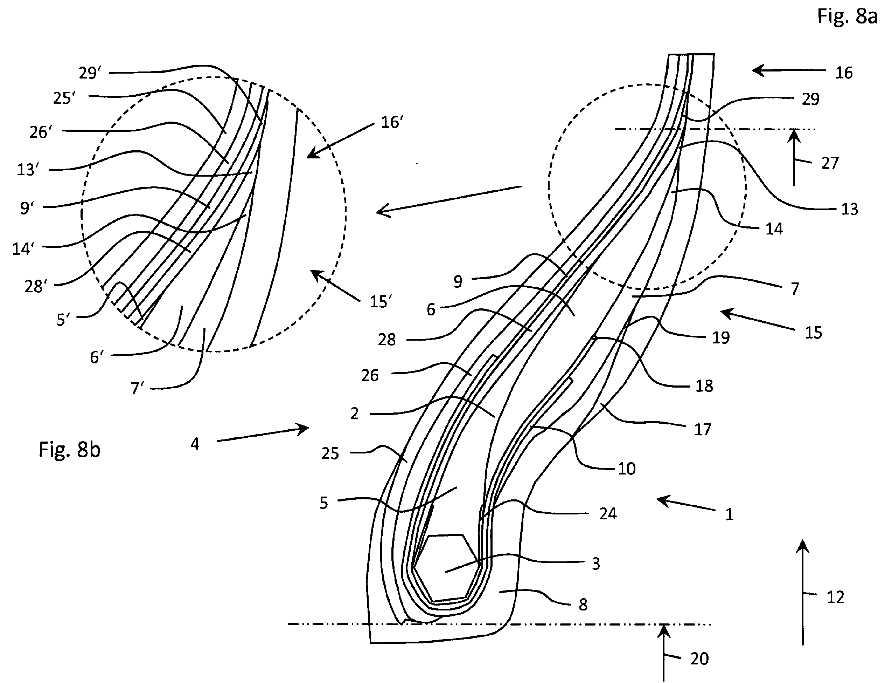

- Fig. 8a:: Eine Radialschnittansicht eines Reifenwulstes eines Schrägschulterreifens, der beispielsweise auf 20"-Felgen oder 22"-Felgen oder 24"-Felgen montiert wird.

Hier wird neben der erfindungsgemäßen Ausbildung des radial äußeren Endes (13) des Kernprofiles (2) beziehungsweise des oberen Kernprofilteiles (6) und des radial äußeren Endes (14) des Wulstaußenprofiles (7) noch ein Wulstinnenprofil (28) eingesetzt, dessen radial äußeres Ende (29) über dem radial äußeren Ende (13) des Kernprofiles (2) beziehungsweise des oberen Kernprofilteiles (6) endet, siehe hierzu WO002005102741; Rohde, Dieter; Bieger, Andreas. Hier ist ein Mindestabstand von 6 mm zwischen dem radial äußeren Ende (29) des Wulstinnenprofiles (28) und dem radial äußeren Ende des Kernprofiles (2) beziehungsweise des oberen Kernprofilteiles (6) vorteilhaft.
- Fig. 8b:: Eine Detailansicht eines Ausschnittes der Radialschnittansicht der Fig. 8a.

### Bezugszeichenliste

### (ist Teil der Beschreibung)

1 Reifenwulst
2, 2' Kernprofil
3 Kern
4 Reifeninnenseite
5 Unteres Kernprofilteil
6, 6' Oberes Kernprofilteil
7, 7' Wulstaußenprofil
8 Hornprofil
9, 9' Karkasseinlage
10 Wulstverstärkung
11 Innenschicht und Füllprofil (Kappe)
12 Radiale Richtung
13, 13'Äußeres Ende des Kernprofiles
14, 14' Äußeres Ende des Wulstaußenprofiles
15, 15' Reifenaußenseite
16, 16' Reifenseitenwand
17 Unteres Ende der Reifenseitenwand
18 Ende der Karkasseinlage
19, 19' Äußeres Ende des Hornprofiles
20 Reifendurchmesser bis zum Wulstbezugspunkt
21 Reifendurchmesser bis zur Erstreckung der größten Reifenbreite
22 Reifenaussendurchmesser
23 Gürtellagen
24 Kernfahne
25, 25' Innenschicht
26, 26' Füllprofil (Kappe)
27 Reifendurchmesser bis zum äußeren Ende des Kernprofils
28, 28' Wulstinnenprofil
29, 29' Äußeres Ende des Wulstinnenprofiles
30 Stahlkordwulstverstärkerlage

## Patentansprüche

1. Fahrzeugluftreifen mit einem Laufstreifen, einer Reifenseitenwand und einem Reifenwulst (1) mit einem Kern (3), einem Kernprofil (2) und einem Wulstaußenprofil,
wobei das Kernprofil (2) den Kern (3) rotationssymetrisch zur axialen Achse des Fahrzeugluftreifens umschließt und mindestens eine Karkasseinlage (9) um den Kern (3) mit dem Kernprofil (2) herumgeschlagen ist, *und wobei an der Außenseite der Karkasslage (9) eine Wulstverstärkung (10) herumgeschlagen ist,*
**dadurch gekennzeichnet, dass**
das in radialer Richtung (12) zum Fahrzeugreifen außen liegende Ende (14) des Wulstaußenprofiles schalenförmig am Kernprofil (2) anliegt und unterhalb des äußeren Endes (13) des Kernprofils (2) angeordnet ist, *wobei das Wulstaußenprofil (7) am Karkasslagenumschlag (1) und der Wulstverstärkung (10) außen anliegt.*

2. Fahrzeugluftreifen nach Anspruch 1,
**dadurch gekennzeichnet, dass**
das äußere Ende (14) des Wulstaußenprofiles (7) in radialer Richtung (12) zum Fahrzeugreifen mindestens ca. 8 mm unterhalb des äußeren Endes (13) des Kernprofiles (2) angeordnet ist.

3. Fahrzeugluftreifen nach einem der vorhergehenden Ansprüche,
**dadurch gekennzeichnet, dass**
ein Hornprofil (8) schalenförmig am Wulstaußenprofil (7) anliegt und das äußere Ende (19) des Hornprofiles (8) in radialer Richtung (12) unterhalb des äußeren Endes (14) des Wulstaußenprofiles (7) angeordnet ist.

4. Fahrzeugluftreifen nach einem der vorhergehenden Ansprüche,
**dadurch gekennzeichnet, dass**
die äußeren Enden (13, 14, 15) des Kernprofiles (2), des Wulstaußenprofiles (7) und des Hornprofils (8) in radialer Richtung des Fahrzeugreifens spitzförmig ausgebildet sind.

5. Fahrzeugluftreifen nach einem der vorhergehenden Ansprüche,
**dadurch gekennzeichnet, dass**
das äußere Ende (13) des Kernprofiles (2) in der spitzförmigen Ausbildung in radialer Richtung des Fahrzeugreifens eine Dicke von mindestens 0,30 mm aufweist.

6. Fahrzeugluftreifen nach einem der vorhergehenden Ansprüche,
**dadurch gekennzeichnet, dass**
das äußere Ende (13) des Kernprofiles (2) in der spitzförmigen Ausbildung in radialer Richtung des Fahrzeugreifens eine Dicke von höchstens 1,00 mm aufweist.

7. Fahrzeugluftreifen nach einem der vorhergehenden Ansprüche,
**dadurch gekennzeichnet, dass**
das äußere Ende (14) des Wulstaußenprofiles (7) in der spitzförmigen Ausbildung in radialer Richtung des Fahrzeugreifens eine Dicke von mindestens 0,10 mm aufweist.

8. Fahrzeugluftreifen nach einem der vorhergehenden Ansprüche,
**dadurch gekennzeichnet, dass**
das äußere Ende (14) des Wulstaußenprofiles (7) in der spitzförmigen Ausbildung in radialer Richtung des Fahrzeugreifens eine Dicke von höchstens 0,80 mm aufweist.

9. Fahrzeugluftreifen nach einem der vorhergehenden Ansprüche,
**dadurch gekennzeichnet, dass**
das untere Ende (17) der Reifenseitenwand (16) die äußeren Enden des Kernprofiles (2), des Wulstaußenprofiles (7) und des Hornprofiles (8) schalenförmig überdeckt.

10. Fahrzeugluftreifen nach einem der vorhergehenden Ansprüche,
**dadurch gekennzeichnet, dass**
das Kernprofil (2) in radialer Richtung (12) eine Mindesthöhe von ca. 64 mm aufweist

11. Fahrzeugluftreifen nach einem der vorhergehenden Ansprüche,
**dadurch gekennzeichnet, dass**
das Kernprofil (2) in radialer Richtung (12) eine maximale Höhe von ca. 148 mm aufweist.

12. Fahrzeugluftreifen nach einem der vorhergehenden Ansprüche,
**dadurch gekennzeichnet, dass**
eine Wulstverstärkung (10) mit Festigkeitstägern aus Stahlcorden vorgesehen ist.

13. Fahrzeugluftreifen nach einem der vorhergehenden Ansprüche,
**dadurch gekennzeichnet, dass**
eine Wulstverstärkung (10) mit Festigkeitstägern aus aus textilen Korden vorgesehen ist.

14. Fahrzeugluftreifen nach einem der vorhergehenden Ansprüche,
**dadurch gekennzeichnet, dass**
das eine Kernfahne (24) eingesetzt wird, die zwischen Drahtkern (3) und Karkasseinlage (9) seitlich und unterhalb des Drahtkernes (3) angeordnet ist und zu beiden Seiten eine Mindesthöhe von 10 mm aufweist.

15. Fahrzeugluftreifen nach einem der vorhergehenden Ansprüche,
**dadurch gekennzeichnet, dass**
ein äußeres Wulstzwischenprofil eingesetzt wird, dessen radial äußeres Ende zwischen dem radial äußeren Ende (13) des Kernprofiles (2), beziehungsweise des oberen Kernprofilteiles (6), und dem radial äußeren Ende (14) des Wulstaußenprofiles (7) endet.

## Claims

1. Pneumatic vehicle tyre with a tread, a tyre sidewall and a tyre bead (1) with a bead core (3), a bead filler (2) and a bead outer profile,
the bead filler (2) enclosing the bead core (3) rotationally symmetrically in relation to the axial axis of the pneumatic vehicle tyre and at least one carcass insert (9) being turned up around the bead core (3) with the bead filler (2), and a bead reinforcement (10) being turned up around the outer side of the carcass ply (9),
**characterized in that**
the end (14) of the bead outer profile that is lying on the outside in the radial direction (12) with respect to the vehicle tyre lies against the bead filler (2) in a cupped manner and is arranged below the outer end (13) of the bead filler (2), the bead outer profile (7) lying on the outside against the carcass ply turn-up (1) and the bead reinforcement (10).

2. Pneumatic vehicle tyre according to Claim 1,
**characterized in that**
the outer end (14) of the bead outer profile (7) is arranged at least about 8 mm below the outer end (13) of the bead filler (2) in the radial direction (12) with respect to the vehicle tyre.

3. Pneumatic vehicle tyre according to one of the preceding claims,
**characterized in that**
a flange profile (8) lies against the bead outer profile (7) in a cupped manner and the outer end (19) of the flange profile (8) is arranged below the outer end (14) of the bead outer profile (7) in the radial direction (12).

4. Pneumatic vehicle tyre according to one of the preceding claims,
**characterized in that**
the outer ends (13, 14, 15) of the bead filler (2), the bead outer profile (7) and the flange profile (8) are formed in a pointed manner in the radial direction of the vehicle tyre.

5. Pneumatic vehicle tyre according to one of the preceding claims,
**characterized in that** the outer end (13) of the bead filler (2) has a thickness of at least 0.30 mm in the pointed formation in the radial direction of the vehicle tyre.

6. Pneumatic vehicle tyre according to one of the preceding claims,
**characterized in that**
the outer end (13) of the bead filler (2) has a thickness of at most 1.00 mm in the pointed formation in the radial direction of the vehicle tyre.

7. Pneumatic vehicle tyre according to one of the preceding claims,
**characterized in that**
the outer end (14) of the bead outer profile (7) has a thickness of at least 0.10 mm in the pointed formation in the radial direction of the vehicle tyre.

8. Pneumatic vehicle tyre according to one of the preceding claims,
**characterized in that**
the outer end (14) of the bead outer profile (7) has a thickness of at most 0.80 mm in the pointed formation in the radial direction of the vehicle tyre.

9. Pneumatic vehicle tyre according to one of the preceding claims,
**characterized in that**
the lower end (17) of the tyre sidewall (16) covers over the outer ends of the bead filler (2), the bead outer profile (7) and the flange profile (8) in a cupped manner.

10. Pneumatic vehicle tyre according to one of the preceding claims,
**characterized in that**
the bead filler (2) has a minimum height of about 64 mm in the radial direction (12).

11. Pneumatic vehicle tyre according to one of the preceding claims,
**characterized in that**
the bead filler (2) has a maximum height of about 148 mm in the radial direction (12).

12. Pneumatic vehicle tyre according to one of the preceding claims,
**characterized in that**
a bead reinforcement (10) with reinforcing elements comprising steel cords is provided.

13. Pneumatic vehicle tyre according to one of the preceding claims,
**characterized in that**
a bead reinforcement (10) with reinforcing elements comprising textile cords is provided.

14. Pneumatic vehicle tyre according to one of the preceding claims,
**characterized in that**
a flipper strip (24) is used, arranged laterally between the wire core (3) and the carcass insert (9) and below the wire core (3), and has a minimum height of 10 mm on both sides.

15. Pneumatic vehicle tyre according to one of the preceding claims,
**characterized in that**
an outer bead intermediate profile is used, the radially outer end of which ends between the radially outer end (13) of the bead filler (2), or of the upper bead filler part (6), and the radially outer end (14) of the bead outer profile (7).

## Revendications

1. Bandage pneumatique pour roue de véhicule présentant une bande de roulement, une paroi latérale de bandage pour roue et un bourrelet (1) de bandage pour roue doté d'une âme (3), d'un profil d'âme (2) et d'un profil extérieur de bourrelet,
le profil d'âme (2) entourant l'âme (3) en symétrie de rotation par rapport à l'axe axial du bandage pneumatique pour roue de véhicule et au moins une garniture (9) de carcasse étant rabattue autour de l'âme (3) avec le profil d'âme (2), un renfort (10) de bourrelet étant rabattu autour du côté extérieur de la couche (9) de carcasse,
**caractérisé en ce que**
l'extrémité (14) du profil extérieur de bourrelet située à l'extérieur du bandage pour roue de véhicule dans la direction radiale (12) repose en forme de coquille sur le profil d'âme (2) et est disposée en dessous de l'extrémité extérieure (13) du profil d'âme (2) et
**en ce que** le profil extérieur (7) de bourrelet repose sur le rabat (1) de couche de carcasse et à l'extérieur du renfort (10) de bourrelet.

2. Bandage pneumatique pour roue de véhicule selon la revendication 1, **caractérisé en ce que** l'extrémité extérieure (14) du profil extérieur (7) de bourrelet est disposée dans la direction radiale (12) en direction du bandage pour roue de véhicule au moins environ 8 mm en dessous de l'extrémité extérieure (13) du profil d'âme (2).

3. Bandage pneumatique pour roue de véhicule selon l'une des revendications précédentes, **caractérisé en ce qu'**un profil de corne (8) repose en forme de coquille sur le profil extérieur (7) de bourrelet et **en ce que** l'extrémité extérieure (19) du profil de corne (8) est disposée dans la direction radiale (12) en dessous de l'extrémité extérieure (14) du profil extérieur (7) de bourrelet.

4. Bandage pneumatique pour roue de véhicule selon l'une des revendications précédentes, **caractérisé en ce que** les extrémités extérieures (13, 14, 15) du profil d'âme (2), du profil extérieur (7) de bourrelet et du profil de corne (8) sont configurées en forme de pointe dans la direction radiale du bandage pour roue de véhicule.

5. Bandage pneumatique pour roue de véhicule selon l'une des revendications précédentes, **caractérisé en ce que** l'extrémité extérieure (13) du profil d'âme (2) configurée en forme de pointe présente dans la direction radiale du bande de roue de véhicule une épaisseur d'au moins 0,30 mm.

6. Bandage pneumatique pour roue de véhicule selon l'une des revendications précédentes, **caractérisé en ce que** l'extrémité extérieure (13) du profil d'âme (2) configurée en forme de pointe présente dans la direction radiale du bande de roue de véhicule une épaisseur d'au plus 1,00 mm.

7. Bandage pneumatique pour roue de véhicule selon l'une des revendications précédentes, **caractérisé en ce que** l'extrémité extérieure (14) du profil extérieur (7) de bourrelet configurée en forme de pointe présente dans la direction radiale du bande de roue de véhicule une épaisseur d'au moins 0,10 mm.

8. Bandage pneumatique pour roue de véhicule selon l'une des revendications précédentes, **caractérisé en ce que** l'extrémité extérieure (14) du profil extérieur (7) de bourrelet configurée en forme de pointe présente dans la direction radiale du bande de roue de véhicule une épaisseur d'au plus 0,80 mm.

9. Bandage pneumatique pour roue de véhicule selon l'une des revendications précédentes, **caractérisé en ce que** l'extrémité inférieure (17) de la paroi latérale (16) du bandage pour roue recouvre en forme de coquille les extrémités extérieures du profil d'âme (2), du profil extérieur (7) de bourrelet et du profil de corne (8).

10. Bandage pneumatique pour roue de véhicule selon l'une des revendications précédentes, **caractérisé en ce que** le profil d'âme (2) présente dans la direction radiale (12) une hauteur minimale d'environ 64 mm.

11. Bandage pneumatique pour roue de véhicule selon l'une des revendications précédentes, **caractérisé en ce que** le profil d'âme (2) présente dans la direction radiale (12) une hauteur maximale d'environ 148 mm.

12. Bandage pneumatique pour roue de véhicule selon l'une des revendications précédentes, **caractérisé en ce qu'**un renfort (10) de bourrelet est doté de renforts constitués de câbles d'acier.

13. Bandage pneumatique pour roue de véhicule selon l'une des revendications précédentes, **caractérisé en ce qu'**un renfort (10) de bourrelet est doté de renforts constitués de câbles textiles.

14. Bandage pneumatique pour roue de véhicule selon l'une des revendications précédentes, **caractérisé en ce qu'**une aile d'âme (24) disposée entre l'âme (3) de fil et la garniture (9) de carcasse sur le côté et en dessous de l'âme de fil (3) et présente sur les deux côtés une hauteur minimale de 10 mm.

15. Bandage pneumatique pour roue de véhicule selon l'une des revendications précédentes, **caractérisé en ce qu'**il utilise un profil intermédiaire extérieur de bourrelet dont l'extrémité radiale extérieure se termine entre l'extrémité radiale extérieure (13) du profil d'âme (2), dans la partie supérieure (6) du profil d'âme ou de l'extrémité radiale extérieure (14) du profil extérieur (7) de bourrelet.
